# EUROPEAN PATENT SPECIFICATION

(11) **EP 4 160 903 B1**
(45) Date of publication and mention of the grant of the patent: **26.11.2025**
(21) Application number: 22198909.8
(22) Date of filing: 30.09.2022
(51) Int. Cl.: H02P 3/02, H02P 6/10, H02P 21/05, B60L 15/20, B60L 53/24, B60L 58/27

(54) **CONTROL APPARATUS FOR DRIVE MOTOR OF AUTOMOBILE, AND TRANSMISSION GEARBOX OF AUTOMOBILE**
STEUERVORRICHTUNG FÜR ANTRIEBSMOTOR EINES KRAFTFAHRZEUGS UND GETRIEBE EINES KRAFTFAHRZEUGS
APPAREIL DE COMMANDE POUR MOTEUR D'ENTRAÎNEMENT D'AUTOMOBILE, ET BOÎTE DE VITESSES DE TRANSMISSION D'AUTOMOBILE

(30) Priority: 30.09.2021 CN 202111166904
(43) Date of publication of application: 05.04.2023
(73) Proprietor: Huawei Digital Power Technologies Co., Ltd., Shenzhen, Guangdong 518043 (CN)
(72) Inventor: LUO, Xian, Shenzhen 518129 (CN); SHI, Chaojie, Shenzhen 518129 (CN); WU, Chaoqiang, Shenzhen 518129 (CN); CHEN, Zhenxing, Shenzhen 518129 (CN)
(74) Representative: Gill Jennings & Every LLP

(56) References cited:
- WO-A1-2017/214232
- JP-A- 2008 252 990
- US-A1- 2020 153 377
- US-A1- 2020 164 755
- US-A1- 2020 298 722

## Description

### TECHNICAL FIELD

Embodiments of this application relate to the field of intelligent vehicle technologies, and in particular, to a control apparatus for a drive motor of an automobile, and a transmission gearbox of an automobile.

### BACKGROUND

With rapid development of electric vehicles, a charging technology of a power battery of an electric vehicle, a heating technology of a low-temperature power battery, and the like become increasingly important. On one hand, for an electric vehicle equipped with a high-voltage power battery, a voltage of the power battery is usually higher than 700 V, and a voltage of a common direct current charging pile is 500 V The common direct current charging pile cannot meet a direct current fast charging requirement of this type of power battery. Therefore, the electric vehicle equipped with the high-voltage power battery further needs to be equipped with a boost DC circuit. A drive motor and an electric control system are used to perform boost charging on the power battery in some solutions, so as to improve system integration and reduce costs. On the other hand, performance of a power battery of an electric vehicle deteriorates in a low-temperature environment, and therefore the power battery needs to be heated. The power battery is heated by making a drive motor generate heat in a manner of locked-rotor of the drive motor and the like in some solutions, so as to replace a part or all of original positive temperature coefficient (PTC) components. This improves system integration and reduces costs.

However, regardless of whether boost charging or heating is performed on the power battery, the drive motor is in a drive motor locked-rotor state. Locked-rotor of the drive motor often produces a locked-rotor torque. This affects brake performance, driving experience, and the like of the electric vehicle.

US 2020/164755 A1 describes a charging station for an electric vehicle, wherein the electric vehicle and the charging station each have couplers and & communication modules. The couplers are relesably coupled for transfer of energy & the communication modules communicate the charging data. The charging station further include: an interface connects with an external source of electrical energy; a control module provides control signals and a switching module is responsive to the control signals for selectively connecting the second coupler and the interface for allowing the transfer of energy between the couplers.

### SUMMARY

The present invention is defined by the features disclosed in the independent claims 1, 5, 10 and 11. Additional embodiments are defined in the dependent claims.

### BRIEF DESCRIPTION OF DRAWINGS

The following describes accompanying drawings used in embodiments of this application.
FIG. 1 is a schematic diagram of an inductive energy storage phase of a drive motor of a boost charging circuit according to an embodiment of this application;
FIG. 2 is a schematic diagram of a charging phase of a power battery of a boost charging circuit according to an embodiment of this application;
FIG. 3 is a schematic diagram of a stator magnetic vector and a position of a rotor during boost charging according to an embodiment of this application;
FIG. 4 is a schematic diagram of a relationship between a locked-rotor torque and an included angle between a stator and a rotor according to an embodiment of this application;
FIG. 5 is a schematic diagram of an architecture of a boost charging system of an automobile according to an embodiment of this application;
FIG. 6 is a schematic diagram of a structure of a power battery heating circuit or a drive motor drive circuit according to an embodiment of this application;
FIG. 7 is a schematic diagram of a position of a rotor and a zero locked-rotor torque when a power battery is heated according to an embodiment of this application;
FIG. 8 is a schematic diagram of an architecture of a power battery heating system of an automobile according to an embodiment of this application;
FIG. 9 is a schematic flowchart of a control method for a drive motor of an automobile according to an embodiment of this application;
FIG. 10 is a schematic diagram of a structure of a drive and brake system of an automobile according to an embodiment of this application;
FIG. 11 is a schematic flowchart of another control method for a drive motor of an automobile according to an embodiment of this application;
FIG. 12 is a schematic partial view of a stator and a rotor according to an embodiment of this application;
FIG. 13 is a schematic diagram of a structure of a control apparatus for a drive motor of an automobile according to an embodiment of this application;
FIG. 14 is a schematic diagram of a structure of another control apparatus for a drive motor of an automobile according to an embodiment of this application;
FIG. 15 is a schematic diagram of a structure of a control device according to an embodiment of this application;
FIG. 16 is a schematic diagram of a ratchet and pawl and relative positions of a stator and a rotor according to an embodiment of this application; and
FIG. 17 is a schematic diagram of another ratchet and pawl and relative positions of a stator and a rotor according to an embodiment of this application.

### DESCRIPTION OF EMBODIMENTS

To help a person skilled in the art understand this application, some technical knowledge in embodiments of this application is first described.

A parking gear (a P gear) of an automatic transmission automobile is a gear evolved from an N gear. In addition to putting a transmission gearbox (a gearbox) to a neutral gear mode, a pawl is installed inside the gearbox to snap a gear on an output shaft to form a mechanical lock. In this way, a drive wheel shaft is clamped to fasten a static or slow-moving vehicle. The P gear is the most common gear among automatic transmission vehicle types, but it is not one of the three standard gears of automatic transmission vehicle types.

Handbrake: A conventional handbrake is of a cable-pulling type and transfers a parking force to a parking mechanism through a pull rod. A pulling degree of a handbrake rod determines the parking force.

An electric parking brake (EPB), also referred to as an electric handbrake, is a technology that implements a parking brake through electric control. The parking brake can be automatically applied after an automobile flames out. It is convenient and reliable for parking. This can prevent accidental release, and avoid an accident caused by forgetting to tighten/release the handbrake.

A vehicle control unit (VCU) is a core electronic control unit that implements vehicle control decision-making. The VCU determines a driver intention of a driver by collecting signals of an accelerator pedal, a brake pedal, a gear, and the like. The VCU monitors information about a vehicle status (such as a vehicle speed and a temperature), sends a running status control instruction of a vehicle to a power system and a power battery system, and controls a working mode of an electric power system of a vehicle-mounted accessory. The VCU has fault diagnosis, protection, and storage functions for an entire vehicle system.

Motor control unit (MCU): Based on an instruction of the VCU, the MCU controls a drive motor to output a given torque and a rotational speed, so as to drive a vehicle to run. The motor control unit monitors its own temperature, an operating temperature of a motor, and a position of a rotor in real time, and transfers related information to the vehicle control unit VCU. This regulates operation of a water pump and a cooling fan and keeps the motor working at an ideal temperature.

A direct axis is also referred to as a d-axis. The direct axis of a motor refers to an axis that is of a center line of a magnetic pole and that a rotor of the motor passes through, that is, an axis connecting an N pole and an S pole.

A quadrature axis is also referred to as a q-axis.

A composite current vector, also referred to as a stator magnetic vector, is a sum vector formed by current vectors on axes in a direct-quadrature axis (a d-axis and a q-axis) coordinate system or a three-phase coordinate system of a current. It should be understood that the stator magnetic vector is a magnetic field generated by a stator, and the magnetic field is a vector, and therefore is referred to as the stator magnetic vector.

A position of the stator magnetic vector refers to a position of the composite current vector.

A position of a rotor, that is, a position of a rotor of a motor, refers to an included angle of an electrical angle between a direct axis of the motor (or referred to as a direct axis of the rotor) and a phase axis.

An included angle between a stator and a rotor is an included angle of an electrical angle between a stator magnetic vector and a direct axis of a motor, that is, an included angle of an electrical angle between a direction of a magnetic field generated by the stator and the direct axis of the motor.

Locked-rotor of a motor refers to a situation where a rotational speed of the motor is zero, but a current of a stator is not zero. A working condition of locked-rotor is that an output torque of a rotor may or may not be zero.

A tooth groove angle refers to an electrical angle between a tooth and a groove of a stator. β = p x 360/z, where β is the tooth groove angle, p is a quantity of rotor pole pairs, and z is a quantity of grooves of a stator.

The following describes in detail technical solutions provided in this application with reference to specific implementations.

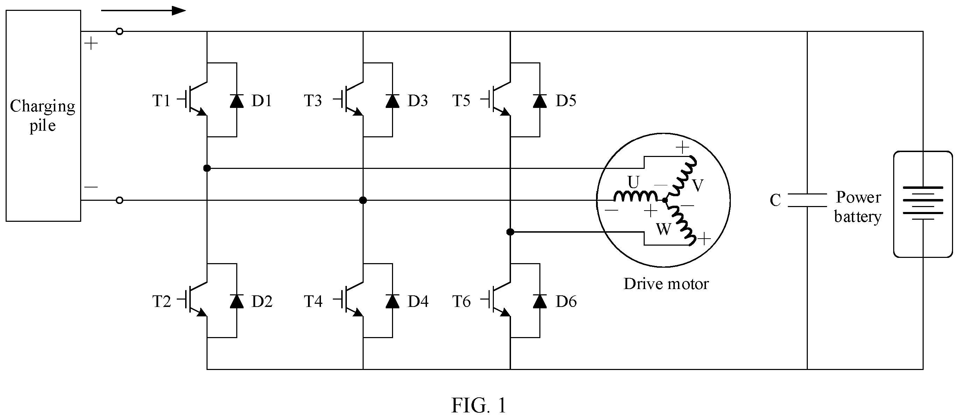

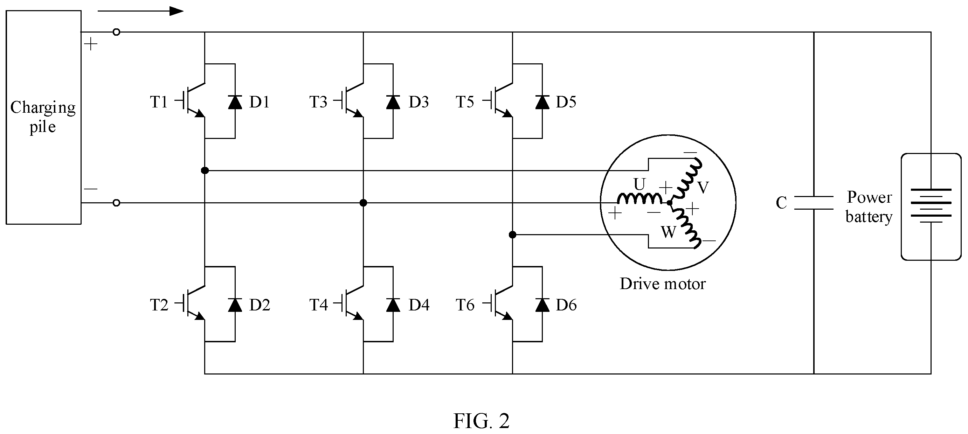

FIG. 1 and FIG. 2 are schematic diagrams of a structure of a boost charging circuit according to an embodiment of this application. The boost charging circuit includes a charging pile, a three-phase bridge arm, a drive motor, a power battery, and a capacitor C. The drive motor is a permanent-magnet synchronous motor, and a connection manner of three phase windings of the drive motor is that two phase windings are connected in parallel and then are separately connected in series to another phase winding. For example, a V-phase winding and a W-phase winding are connected in parallel and then are separately connected in series to a U-phase winding. Therefore, the boost charging circuit may be referred to as a two-parallel and one-series boost charging circuit. A positive electrode of the charging pile is connected to a positive end of the three-phase bridge arm, and a negative electrode of the charging pile is connected to a lead-out cable of a series phase winding (for example, a U-phase winding) of the drive motor. In the three-phase bridge arm, a transistor T1, a diode D1, a transistor T2, and a diode D2 form one-phase bridge arm, the transistor T1 is connected in parallel to the diode D 1, and the transistor T2 is connected in parallel to the diode D2. A transistor T3, a diode D3, a transistor T4, and a diode D4 form one-phase bridge arm, the transistor T3 is connected in parallel to the diode D3, and the transistor T4 is connected in parallel to the diode D4. A transistor T5, a diode D5, a transistor T6, and a diode D6 form one-phase bridge arm, the transistor T5 is connected in parallel to the diode D5, and the transistor T6 is connected in parallel to the diode D6.

As shown in FIG. 1, in an inductive energy storage phase of the drive motor of the boost charging circuit, the transistor T1 and a transistor T5 are on, and other transistors and diodes are off. A current flowing out from the positive electrode of the charging pile is divided into two paths. One path flows into the V-phase winding of the drive motor through the transistor T1, and the other path flows into the W-phase winding of the drive motor through the transistor T5. The current flowing out from the V-phase winding of the drive motor and the current flowing out from the W-phase winding of the drive motor are combined into one path and then flows into the U-phase winding of the drive motor. The current flowing out from the U-phase winding of the drive motor flows into the negative electrode of the charging pile. In this way, a closed loop is formed, and energy is stored in the three phase windings of the drive motor.

As shown in FIG. 2, in a charging phase of the power battery of the boost charging circuit, the diode D2 and the diode D6 are on, other transistors and diodes are off. A current flowing out from the U-phase winding of the drive motor flows into the negative electrode of the charging pile, and then flows out from the positive electrode of the charging pile. The current flowing out from the positive electrode of the charging pile flows into the power battery. The current flowing out from the power battery is divided into two paths. One path flows into the V-phase winding of the drive motor through the diode D2, and the other path flows into the W-phase winding of the drive motor through the diode D6. The current flowing out from the V-phase winding of the drive motor and the current flowing out from the W-phase winding of the drive motor are combined into one path and then flows into the U-phase winding of the drive motor. In this way, a closed loop is formed, so that boost charging is performed on the power battery by using the drive motor.

It should be noted that, when the boost charging circuit shown in FIG. 1 and FIG. 2 perform boost charging on the power battery, the three phase windings of the drive motor generate heat, and heat generated by the three phase windings may be transferred to the power battery by using a heat exchanger, so that the power battery may also be heated during boost charging.

It should be understood that advantages of a two-parallel and one-series boost charging solution are as follows: (1) Compared with a solution of boost charging by the three phase windings in parallel, the two-parallel and one-series boost charging solution has a larger inductance and a smaller ripple, and can alleviate a harmonic control problem on a DC side; (2) the drive motor does not need to be reworked to lead out a three-phase neutral point.

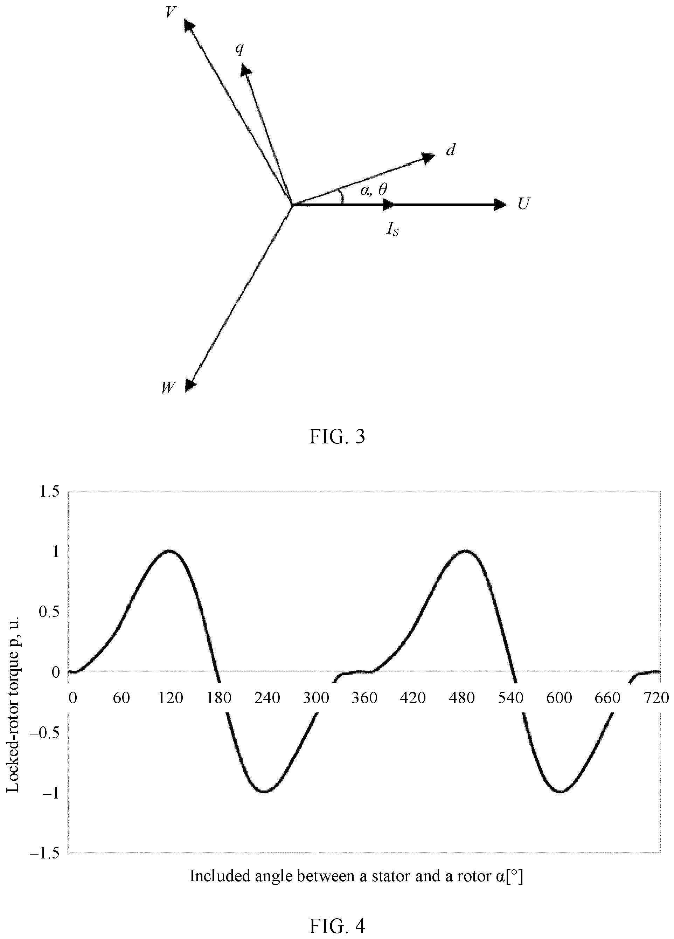

However, when the two-parallel and one-series boost charging solution is used for charging, a stator magnetic vector of the drive motor is not zero. However, a vehicle is in a static state during charging, and a position of a rotor of the drive motor is random. When a direct axis of the drive motor does not coincide with the stator magnetic vector, a locked-rotor torque is produced. This affects safety and reliability of a vehicle brake system to some extent. A phenomenon that the stator magnetic vector is not zero is shown in FIG. 3. In FIG. 3, a U-axis represents an axis of the U-phase winding, a V-axis represents an axis of the V-phase winding, a W-axis represents an axis of the W-phase winding, a d-axis represents the direct axis of the drive motor, a q-axis represents a quadrature axis of the drive motor, Iₛ represents the stator magnetic vector, α represents an included angle between a stator and a rotor, and θ represents the position of the rotor. It is assumed that the negative electrode of the charging pile is connected to the lead-out cable of the U-phase winding. When two-phase synchronous wave emission or interleaved wave emission is controlled, both stator magnetic vectors coincide with the axis of the U-phase winding. Synchronous wave emission means that switch transistors on bridge arms corresponding to two parallel phase windings are simultaneously turned on or turned off. Interleaved wave emission means that the switch transistors on the bridge arms corresponding to the two parallel phase windings are not simultaneously turned on or turned off. A difference between the two control manners is that ripple sizes of currents of three phase windings are different. This does not affect an average value of the currents. In addition, because the locked-rotor torque depends on the included angle between the stator and the rotor and a charging power, as shown in FIG. 4, and the position of the rotor is random, the locked-rotor torque is random. In other words, this manner inherently has a possibility of a large locked-rotor torque.

Therefore, under a working condition of locked-rotor of the drive motor, a value of the locked-rotor torque depends on the included angle between the stator and the rotor and the charging power. In a specific position, the locked-rotor torque reaches a maximum locked-rotor torque at a specified charging power. Therefore, in the two-parallel and one-series boost charging solution, an extremely large locked-rotor torque may occur. This affects performance of the brake system. In addition, direct power-on and charging at a position corresponding to a large locked-rotor torque may cause an extremely great impact torque, and affect driving experience.

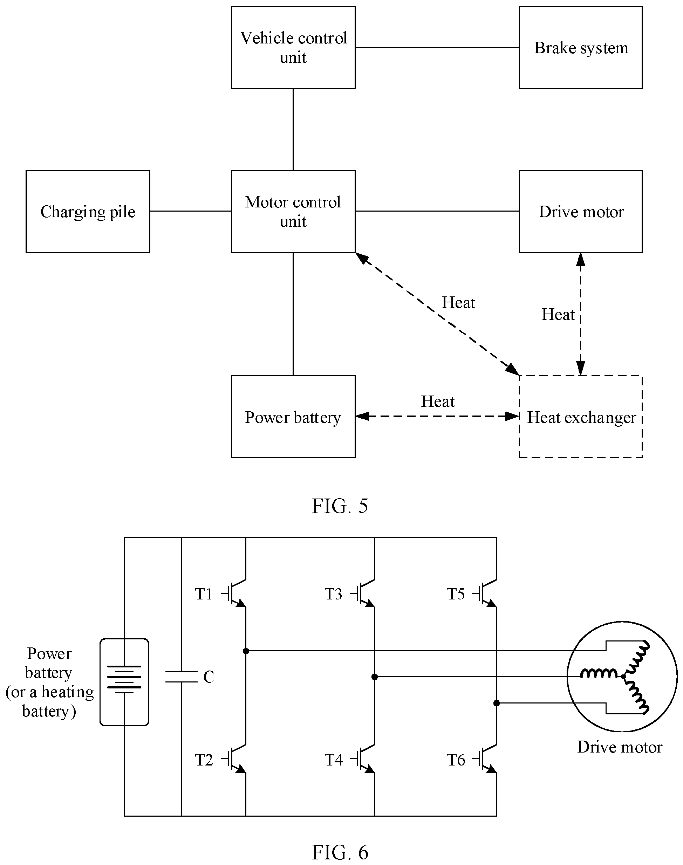

FIG. 5 is a schematic diagram of an architecture of a boost charging system of an automobile according to an embodiment of this application. The boost charging system of the automobile includes a vehicle control unit, a brake system, a motor control unit, a drive motor, a charging pile, and a power battery. The vehicle control unit is connected to the brake system, and the vehicle control unit may send an instruction to the brake system, to instruct the brake system to start or exit a parking gear, and start or release an electric parking brake. The vehicle control unit is further connected to the motor control unit, and the vehicle control unit may send an instruction to the motor control unit, to instruct the motor control unit to control the drive motor. The motor control unit is connected to the drive motor, so as to control the drive motor. The motor control unit may be connected to the charging pile, and an amount of a current flowing into the drive motor from the charging pile may be controlled by the motor control unit. The power battery is further connected to the motor control unit, so that the motor control unit supplies power to the drive motor by using the power battery. Optionally, the boost charging system of the automobile further includes a heat exchanger. The heat exchanger can transfer heat generated by the motor control unit and the drive motor to the power battery, so that the power battery can be further heated in a boost charging process of the power battery.

FIG. 6 is a schematic diagram of a structure of a power battery heating circuit or a drive motor drive circuit according to an embodiment of this application. The power battery heating circuit or the drive motor drive circuit includes a three-phase bridge arm, a drive motor. a power battery (or a heating battery, that is, a battery that provides a current for heating the power battery), and a capacitor C. The drive motor is a permanent-magnet synchronous motor. In the three-phase bridge arm, a transistor T1 and a transistor T2 form a one-phase bridge arm, a transistor T3 and a transistor T4 form a one-phase bridge arm, and a transistor T5 and a transistor T6 form a one-phase bridge arm. When the power battery (in this case, the power battery is not shown in FIG. 6) is heated, and the drive motor is in a locked-rotor state, the heating battery supplies power to the drive motor, so that three phase windings of the drive motor generate heat, and the heat generated by the three phase windings is transferred to the power battery by using a heat exchanger. In this way, the power battery is heated by using the drive motor. When the drive motor is in a drive state, the power battery supplies power to the drive motor, so that the drive motor provides driving force.

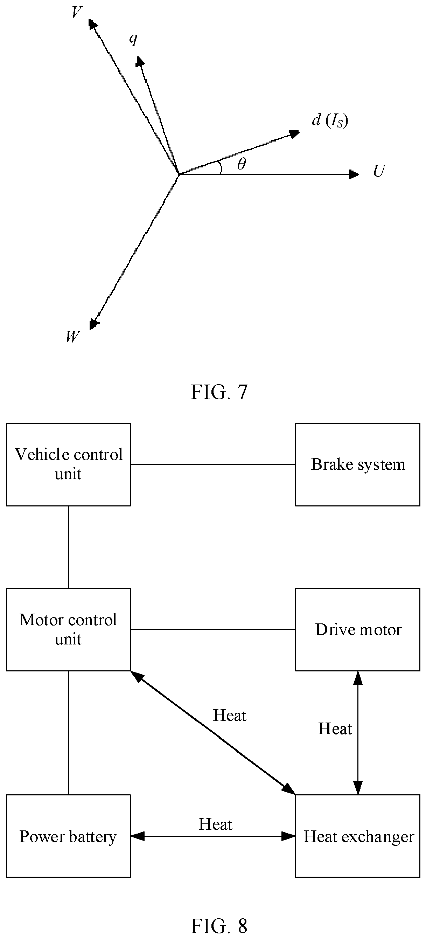

When the drive motor is used for heating the power battery, the drive motor is in the locked-rotor state, and there may be a locked-rotor torque. Currents of the three phase windings of the drive motor are controllable, and a stator magnetic vector and a position of a rotor may be controlled to coincide, so as to control the locked-rotor torque to be zero. That the stator magnetic vector and the position of the rotor coincide means that when the position of the rotor and a direction of a magnetic field generated by a stator are also represented by electrical angles, the electrical angles corresponding to the two are the same. As shown in FIG. 7, a stator magnetic vector Iₛ coincides with a direct axis (a d-axis) of the drive motor. In this case, the locked-rotor torque of the drive motor is zero. A U-axis represents an axis of a U-phase winding, a V-axis represents an axis of a V-phase winding, a W-axis represents an axis of a W-phase winding, a q-axis represents a quadrature axis of the drive motor, α represents an included angle between the stator and the rotor, and θ represents the position of the rotor. It should be noted that, the key to control the locked-rotor torque of the drive motor to be zero lies in accurate obtaining of the position of the rotor and accurate sampling and control of the three-phase current. However, in practice, due to limitation of the position of the rotor and current sampling precision, the included angle between the stator and the rotor can hardly be completely zero. In a worse case, when the drive motor is static, the direct axis of the drive motor is not aligned with an axis of one tooth of the stator, or an included angle of an electrical angle between an axis of one magnetic pole of the rotor and the axis of the tooth of the stator is not 0°. An existence of a tooth groove torque may further result in a rotational speed of the drive motor to fluctuate around zero, and consequently a vehicle jitter occurs.

FIG. 8 is a schematic diagram of an architecture of a power battery heating system of an automobile according to an embodiment of this application. The power battery heating system of the automobile includes a vehicle control unit, a brake system, a motor control unit, a drive motor, a power battery and a heat exchanger. The vehicle control unit is connected to the brake system, and the vehicle control unit may send an instruction to the brake system, to instruct the brake system to start or exit a parking gear, and start or release an electric parking brake. The vehicle control unit is further connected to the motor control unit, and the vehicle control unit may send an instruction to the motor control unit, to instruct the motor control unit to control the drive motor. The motor control unit is connected to the drive motor, so as to control the drive motor. The power battery is further connected to the motor control unit, so that the motor control unit supplies power to the drive motor by using the power battery. The heat exchanger can transfer heat generated by the motor control unit and the drive motor to the power battery, to heat the power battery.

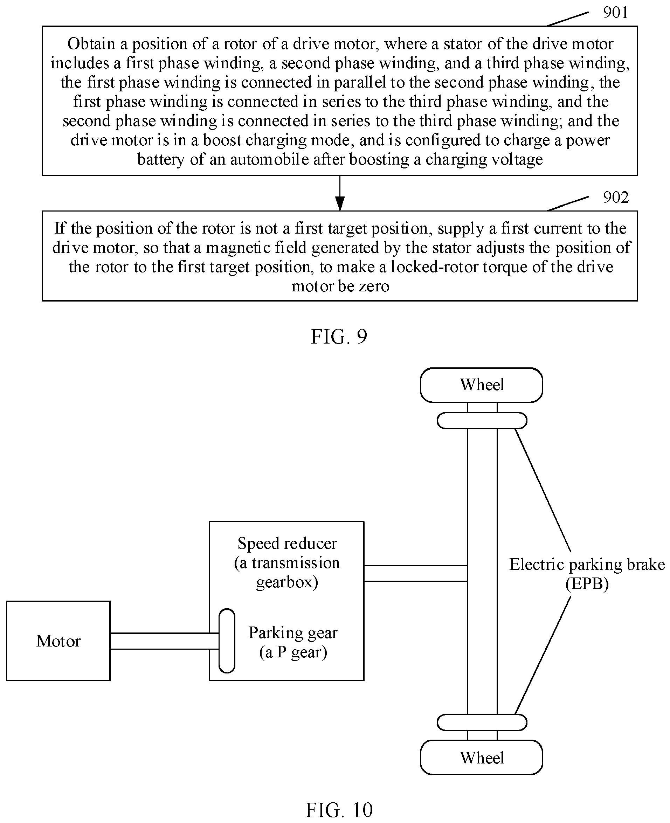

FIG. 9 is a schematic flowchart of a control method for a drive motor of an automobile according to an embodiment of this application. The control method for the drive motor is described as a series of steps or operations. It should be understood that the control method for the drive motor may be performed in various sequences and/or simultaneously, and is not limited to the execution sequence shown in FIG. 9. In addition, the control method for the drive motor shown in FIG. 9 may be implemented based on the boost charging circuit shown in FIG. 1 and FIG. 2. The control method for the drive motor may be executed by a control device, for example, the vehicle control unit applied to the boost charging system shown in FIG. 5. The control method for the drive motor includes but is not limited to the following steps or operations.

Step 901: Obtain a position of a rotor of the drive motor, where a stator of the drive motor includes a first phase winding, a second phase winding, and a third phase winding, the first phase winding is connected in parallel to the second phase winding, the first phase winding is connected in series to the third phase winding, and the second phase winding is connected in series to the third phase winding; and the drive motor is in a boost charging mode, and is configured to charge a power battery of the automobile after boosting a charging voltage.

For example, the first phase winding is the V-phase winding in FIG. 1 and FIG. 2, the second phase winding is the W-phase winding in FIG. 1 and FIG. 2, and the third phase winding is the U-phase winding in FIG. 1 and FIG. 2.

That the drive motor is in the boost charging working mode means that the drive motor is configured to charge the power battery after boosting the charging voltage.

Step 902: If the position of the rotor is not a first target position, supply a first current to the drive motor, so that a magnetic field generated by the stator adjusts the position of the rotor to the first target position, to make a locked-rotor torque of the drive motor be zero.

When the drive motor is in the boost charging mode, the drive motor is static, but the position of the rotor of the drive motor is random. The position of the rotor may be at the first target position that makes the locked-rotor torque be zero, or may not be at the first target position that makes the locked-rotor torque be zero. When the position of the rotor is the first target position, the drive motor may be directly powered on, so as to start a boost charging process. When the position of the rotor is not the first target position, the position of the rotor needs to be adjusted to the first target position, and then the drive motor is powered on.

In this embodiment of this application, the stator of the drive motor of the automobile includes the first phase winding, the second phase winding, and the third phase winding. When the power battery of the automobile is charged after the charging voltage is boosted by using the drive motor, the first phase winding is connected in parallel to the second phase winding, the first phase winding is connected in series to the third phase winding, and the second phase winding is connected in series to the third phase winding. Therefore, this charging manner is referred to as a two-parallel and one-series boost charging manner. In the two-parallel and one-series boost charging manner, when the drive motor is in a locked-rotor state, the position of the rotor is random. As a result, the drive motor may have the locked-rotor torque. This affects brake performance, driving experience, and the like of the automobile. In this application, when boost charging is performed on the drive power battery of the automobile by using the drive motor of the automobile, the position of the rotor is obtained. If the position of the rotor is not the first target position that makes the locked-rotor torque of the drive motor be zero, the first current is supplied to the drive motor, so that the magnetic field generated by the stator adjusts the position of the rotor to the first target position. In this way, when the drive motor is used for boost charging, there is no locked-rotor torque. In this way, brake performance, driving experience, and the like of an electric vehicle are not affected.

In a possible implementation, when the position of the rotor is the first target position, an included angle of an electrical angle between a direct axis of the drive motor and an axis of the third phase winding is 0° or 180°.

In this application, during two-parallel and one-series boost charging, a direction of the magnetic field generated by the stator coincides with an axis of one phase winding connected in series. When the direct axis of the drive motor coincides with the direction of the magnetic field generated by the stator, the drive motor has no locked-rotor torque. Therefore, when the direct axis of the drive motor coincides with the axis of the phase winding connected in series, the drive motor has no locked-rotor torque. That is, when the direct axis of the drive motor coincides with the axis of the third phase winding of the stator, the drive motor has no locked-rotor torque. When the position of the rotor is the first target position, the included angle of the electrical angle between the direct axis of the drive motor and the axis of the third phase winding is 0° or 180°. In this way, when the position of the rotor of the drive motor is the first target position, the locked-rotor torque of the drive motor is zero.

When the position of the rotor is not the first target position, the first current may be supplied to the drive motor by using a charging pile, so that the electric stator generates a magnetic field. The direction of the magnetic field generated by the stator coincides with the axis of the third phase winding of the stator, to attract the rotor, so that the direct axis of the drive motor (or referred to as a direct axis of the rotor) coincides with the axis of the third phase winding. In other words, the position of the rotor is adjusted to the first target position.

It should be noted that, when the drive motor is normally driven, currents of the three phase windings of the stator are sinusoidal alternating currents with the three phase windings staggered electrically by 120°, so that a composite vector of a magnetic field generated by the three phase windings rotates. When the drive motor is in a working condition of locked-rotor such as boost charging or power battery heating, the currents of the three phase windings of the stator are direct current flowing with the three phase windings staggered electrically by 120°, and the composite vector of the magnetic field generated by the three phase windings is equivalent to being fixed at a specific moment. Therefore, the magnetic field generated by the stator is static. Therefore, when the first current is supplied, the magnetic field generated by the stator is a static magnetic field.

In this implementation, when an included angle of an electrical angle between the direct axis of the drive motor (or referred to as the direct axis of the rotor) and the direction of the magnetic field generated by the stator is 0° or 180°, the drive motor produces no locked-rotor torque in the locked-rotor state. Before the drive motor is used for boost charging on the power battery, the position of the rotor of the drive motor is random. Therefore, the included angle of the electrical angle between the direct axis of the drive motor and the direction of the magnetic field generated by the stator may not be 0° or 180°. If the drive motor is directly powered on, the locked-rotor torque is produced. The stator of the drive motor includes the first phase winding, the second phase winding and the third phase winding. When boost charging is performed on the power battery, the first phase winding is connected in parallel to the second phase winding, the first phase winding is connected in series to the third phase winding, and the second phase winding is connected in series to the third phase winding. This boost charging manner is referred to as two-parallel and one-series boost charging. However, in the two-parallel and one-series boost charging manner, when a current is supplied to the drive motor, an included angle of an electrical angle between the direction of the magnetic field generated by the stator and an axis of a series phase winding in two parallel and one series is 0° or 180°, that is, an included angle of an electrical angle between the direction of the magnetic field generated by the stator and the axis of the third phase winding is 0° or 180°. In this way, if an included angle of an electrical angle between the direct axis of the drive motor and the axis of the series phase winding (that is, the third phase winding) is 0° or 180°, the included angle of the electrical angle between the direct axis of the drive motor and the direction of the magnetic field generated by the stator may be 0° or 180°. In this application, before the charging current for boost charging on the power battery is supplied to the drive motor, the position of the rotor is obtained. If the current position of the rotor does not make the included angle of the electrical angle between the direct axis of the drive motor and the axis of the third phase winding be 0° or 180°, the drive motor has the locked-rotor torque. In this case, the first current is supplied to the drive motor, and the magnetic field generated by the stator attracts the rotor, so that the rotor is rotated to a position that makes the included angle of the electrical angle between the direct axis of the drive motor and the axis of the third phase winding be 0° or 180°. In other words, the rotor is rotated to the first target position that makes the locked-rotor torque be zero. This releases the locked-rotor torque produced during boost charging.

According to the invention, before the supplying a first current to the drive motor, so that a magnetic field generated by the stator adjusts the position of the rotor to the first target position, to make a locked-rotor torque of the drive motor be zero, the method further includes: starting an electric parking brake of the automobile, and exiting a parking gear of the automobile.

FIG. 10 is a schematic diagram of a structure of a drive and brake system of an automobile according to an embodiment of this application. As shown in FIG. 10, when the automobile is being charged, the automobile is stationary, and the automobile is engaged into a parking gear (a P gear). In this case, a pawl of a transmission gearbox (a speed reducer) is clamped into a ratchet, a rotor of a drive motor is locked, and a wheel of the automobile is also locked. When boost charging is performed on a power battery of the automobile, the drive motor of the automobile is in a locked-rotor state, and in this case there is a locked-rotor torque. To release the locked-rotor torque, a position of the rotor needs to be rotated. This requires that the rotor can be rotated. Therefore, exiting of the parking gear of the automobile is needed. However, after exiting of the parking gear of the automobile, the wheel of the automobile is not locked. To prevent prevent the wheel of the automobile from being rotated, an electric parking brake of the automobile needs to be started to lock the wheel of the automobile.

In this implementation, because the automobile is stationary when being charged, the automobile may be engaged into the parking gear. However, when the automobile is engaged into the parking gear, the rotor of the drive motor may be locked and cannot be rotated. Therefore, start the electric parking brake instead of the parking gear to lock the automobile, and exit the parking gear, so that the rotor can be attracted by a magnetic field generated by a stator, and is rotated to a first target position that can make the locked-rotor torque be zero.

According to the invention, the method further includes: if the first current is supplied to the drive motor, but the position of the rotor is not adjusted to the first target position, releasing the electric parking brake of the automobile within first preset duration, so that the locked-rotor torque of the drive motor adjusts the position of the rotor to the first target position.

It should be understood that when the position of the rotor is not the first target position, there is the locked-rotor torque in the drive motor. If the automobile is in a state of exiting the parking gear and releasing the electric parking brake, the rotor or the wheel may be rotated under an action of the locked-rotor torque. Therefore, the first preset duration may be set, so that when duration for releasing the electric parking brake reaches the first preset duration, the action of the locked-rotor torque just rotates the position of the rotor to the first target position, and then the electric parking brake is started to lock the wheel.

In this implementation, the first current is supplied, so that the magnetic field generated by the stator is a static magnetic field. Affected by a tooth side gap, the static magnetic field may not be able to rotate the rotor to the first target position that makes the locked-rotor torque be zero. In this case, the electric parking brake of the automobile may be released, so that the automobile is not locked, and the rotor may be rotated under the action of the locked-rotor torque. In addition, the first preset duration for releasing the electric parking brake is set, and the locked-rotor torque may rotate the rotor to the first target position that makes the locked-rotor torque of the drive motor be zero. In this way, the drive motor can perform boost charging on the power battery without the locked-rotor torque.

In a possible implementation, the method further includes: if the first current is supplied to the drive motor or the electric parking brake of the automobile is released within the first preset duration, but the position of the rotor is not adjusted to the first target position, switching a working mode of the drive motor to a drive mode, so that the power battery supplies power to the drive motor; releasing the electric parking brake of the automobile within second preset duration, so that the magnetic field generated by the stator adjusts the position of the rotor to the first target position; and after the position of the rotor is adjusted to the first target position, switching the working mode of the drive motor to the boost charging mode.

When the working mode of the drive motor is the drive mode, the drive circuit may be shown in FIG. 6. In this case, the drive motor is normally driven, currents of three phase windings of the stator are sinusoidal alternating currents with the three phase windings staggered electrically by 120°, so that a composite vector of a magnetic field generated by the three phase windings rotates. Therefore, when the power battery supplies power to the drive motor, the magnetic field generated by the stator of the drive motor is a rotating magnetic field. The rotating magnetic field can pull the rotor in the state of exiting the parking gear and releasing the electric parking brake. Therefore, the first preset duration may be set, so that when the duration for releasing the electric parking brake reaches the first preset duration, the rotating magnetic field generated by the stator just rotates the position of the rotor to the first target position, and then the electric parking brake is started to lock the wheel.

In this implementation, the first current is supplied, so that the magnetic field generated by the stator is the static magnetic field. Affected by the tooth side gap, the static magnetic field may not be able to rotate the rotor to the first target position that makes the locked-rotor torque be zero. In this case, the working mode of the drive motor can be switched to the drive mode. When the drive motor is normally driven, the power battery supplies power to the drive motor. The currents of the three phase windings of the stator are sinusoidal alternating currents with the three phase windings staggered electrically by 120°. The magnetic field generated by the stator is the rotating magnetic field, and the rotating magnetic field may attract the rotor, so that the rotor is rotated. In addition, the second preset duration for releasing the electric parking brake is set, and the rotor is rotated by the rotating magnetic field to the first target position that makes the locked-rotor torque of the drive motor be zero. In addition, after the rotor is rotated to the first target position that makes the locked-rotor torque of the drive motor be zero, the working mode of the drive motor is switched to the boost charging mode. In this way, the drive motor can perform boost charging on the power battery without the locked-rotor torque.

In a possible implementation, the method further includes: when the position of the rotor is the first target position, supplying a second current to the drive motor, so that the drive motor charges the power battery after boosting a charging voltage.

In this implementation, when the rotor is at the first target position that makes the locked-rotor torque of the drive motor be zero, the second current is supplied to the drive motor to perform boost charging on the power battery. Although locked-rotor of the drive motor occurs during boost charging, performance of a brake system is not affected, a great impact torque is not caused, and driving experience is not affected.

The following further describes, by using example 1 and example 2, the control method for the drive motor described in FIG. 9.

### Example 1:

In Example 1, a two-parallel and one-series boost charging manner is used, and boost charging is performed on a power battery of an automobile by using a drive motor of the automobile. Specifically, a charging current enables a stator of the drive motor to generate a static magnetic field, to adjust a position of a rotor of the drive motor. In addition, a brake system cooperates with the action, so that when the rotor is at a fixed point position, the automobile is stopped and charged.

When the drive motor is configured to perform boost charging on the power battery, a stator magnetic vector (that is, the static magnetic field generated by the stator) coincides with an axis of one phase winding connected in series in three phase windings of the stator. In a boost charging state, if the rotor can be freely rotated, a direction of a direct axis of the rotor (that is, a direct axis of the drive motor) coincides with a direction of the stator magnetic vector. This releases a locked-rotor torque of the drive motor. In short, when the position of the rotor is 0°, the locked-rotor torque of the drive motor can be released.

Relative positions of the drive motor, a parking gear in a speed reducer, a wheel, and an electric parking brake of the automobile are shown in FIG. 10. It is assumed that a hardware status of a boost charging circuit is as follows: AU-phase winding of the stator of the drive motor is separately connected in series to a V-phase winding and a W-phase winding, and the V-phase winding is connected in parallel to the W-phase winding. When the automobile is in a static state, an initial position of the rotor of the drive motor is 10°. A specific implementation process of Example 1 is as follows.
(1) After receiving a boost charging enabling instruction, a vehicle control unit sets a working mode of the drive motor to a boost charging mode, and obtains that the initial position of the rotor is 10°. Specifically, the vehicle control unit sends an instruction to a motor control unit. After receiving the instruction, the motor control unit sets the working mode of the drive motor to the boost charging mode, obtains that the initial position of the rotor is 10°, and sends the obtained initial position of the rotor to the vehicle control unit.
(2) The vehicle control unit sends the instruction to the brake system. After the brake system receives the instruction, exit the parking gear and start the electric parking brake. It should be understood that, in this case, the automobile is still in a locked state.
(3) The vehicle control unit sets the charging current to a first current, and the drive motor generates the stator magnetic vector (that is, the static magnetic field generated by the stator). The stator magnetic vector attracts the rotor to adjust the position of the rotor. Then, the position of the rotor is obtained again. Specifically, the vehicle control unit sends the instruction to the motor control unit. After receiving the instruction, the motor control unit sets the charging current to the first current, obtains the position of the rotor again, and sends the obtained position of the rotor to the vehicle control unit. The first current may be slightly less than a normal charging current (that is, a second current), to reduce torque impact in a process of adjusting the position of the rotor. The charging current is a current of a charging pile.
(4) If the rotor is rotated to a first target position, that is, the position of the rotor is 0°, the vehicle control unit sets the charging current to the normal charging current (that is, the second current) and maintains the normal charging current until boost charging is stopped. Specifically, the vehicle control unit sends the instruction to the motor control unit. After receiving the instruction, the motor control unit sets the charging current to the normal charging current.
(5) If the rotor is not rotated to the first target position, that is, the position of the rotor is not 0°,
   a. the vehicle control unit sends the instruction to the brake system, and after the brake system receives the instruction, release a first preset duration for the electric parking brake temporarily, where a value of the first preset duration is determined according to a specific control strategy;
   b. keep the charging current being the first current unchanged, and pull the rotor/a tire within the first preset duration by using the locked-rotor torque, so that the rotor is rotated to the first target position;
   c. after the rotor is rotated to the first target position, the vehicle control unit immediately sends the instruction to the brake system. After the brake system receives the instruction, immediately start the electric parking brake and engage into the parking gear, to ensure that the automobile is in the locked state; and
   d. the vehicle control unit sets the charging current to the normal charging current and maintains the normal charging current until boost charging is stopped. Specifically, the vehicle control unit sends the instruction to the motor control unit. After receiving the instruction, the motor control unit sets the charging current to the normal charging current.
(6) After receiving an instruction of stopping boost charging from a user, the vehicle control unit linearly reduces the charging current to zero. Specifically, the vehicle control unit linearly reduces the charging current to zero by using the motor control unit, and then the motor control unit exits the boost charging mode, so that the drive motor also exits the boost charging mode.

### Example 2:

In Example 2, a two-parallel and one-series boost charging manner is used, and boost charging is performed on a power battery of an automobile by using a drive motor of the automobile. Specifically, a charging current enables a stator of the drive motor to generate a static magnetic field to adjust a position of a rotor of the drive motor. The power battery supplies power to the drive motor so that the rotor of the drive motor generates a rotating magnetic field to adjust the position of the rotor of the drive motor. In addition, a brake system cooperates with the action, so that when the rotor is at a fixed point position, the automobile is stopped and charged.

When an included angle between a stator and a rotor is 0° or 180°, a locked-rotor torque of the drive motor is zero. Therefore, a first target position may be 0° or 180°. After the position of the rotor is obtained, the rotor may be rotated to 0° or 180° according to a principle of selecting the near. For example, when the position of the rotor is between -90° and 90°, the first target position may be set to 0°; and when the position of the rotor is between 90° and 270°, the first target position may be set to 180°. In this way, the motor control unit controls the power battery to supply power to the drive motor, to generate a rotating positioning magnetic field. After the rotor is slowly moved to an expected position, the position of the rotor is locked, and boost charging is started. This can release the locked-rotor torque more flexibly.

Relative positions of the drive motor, a parking gear in a speed reducer, a wheel, and an electric parking brake of the automobile are shown in FIG. 10. It is assumed that a hardware status of a boost charging circuit is as follows: A U-phase winding of the stator of the drive motor is separately connected in series to a V-phase winding and a W-phase winding, and the V-phase winding is connected in parallel to the W-phase winding. When the automobile is in a static state, an initial position of the rotor of the drive motor is 110°. A specific implementation process of Example 2 is as follows.
(1) After receiving a boost charging enabling instruction from a user, a vehicle control unit sets a working mode of the drive motor to a boost charging mode, and obtains that the initial position of the rotor is 110°. Specifically, the vehicle control unit sends an instruction to a motor control unit. After receiving the instruction, the motor control unit sets the working mode of the drive motor to the boost charging mode, obtains that the initial position of the rotor is 110°, and sends the obtained initial position of the rotor to the vehicle control unit.
(2) The vehicle control unit sends the instruction to the brake system. After the brake system receives the instruction, exit the parking gear and start the electric parking brake. It should be understood that, in this case, the automobile is still in a locked state.
(3) The vehicle control unit sets the charging current to a first current, and the drive motor generates a stator magnetic vector (that is, a static magnetic field generated by the stator). The stator magnetic vector attracts the rotor to adjust the position of the rotor. Then, the position of the rotor is obtained again. Specifically, the vehicle control unit sends the instruction to the motor control unit. After receiving the instruction, the motor control unit sets the charging current to the first current, obtains the position of the rotor again, and sends the obtained position of the rotor to the vehicle control unit. The first current may be slightly less than a normal charging current (that is, a second current), to reduce torque impact in a process of adjusting the position of the rotor. The charging current is a current of a charging pile. It should be noted that, in this case, because a magnetic field generated by the stator is the static magnetic field, and a direction of the magnetic field coincides with an axis of the U-phase winding, the rotor is attracted to fit onto an axis of the U-phase winding. Therefore, in this case, the first target position can be set only to 0°.
(4) If the rotor is rotated to the first target position, that is, the position of the rotor is 0°, the vehicle control unit sets the charging current to the normal charging current (that is, the second current) and maintains the normal charging current until boost charging is stopped. Specifically, the vehicle control unit sends the instruction to the motor control unit. After receiving the instruction, the motor control unit sets the charging current to the normal charging current.
(5) If the rotor is not rotated to the first target position, that is, the position of the rotor is not 0°,
   a. the vehicle control unit switches the working mode of the drive motor to a drive mode by using the motor control unit, and sets the first target position to 180° based on that the initial position of the rotor is 110°; and controls the power battery to supply power to the drive motor by using the motor control unit, and controls currents of three phase windings to enable the stator to generate the rotating magnetic field, so as to pull the position of the rotor to rotate;
   b. the vehicle control unit sends the instruction to the brake system, and after the brake system receives the instruction, release a second preset duration for the electric parking brake temporarily, where a value of the second preset duration is determined according to a specific control policy, and the rotor is rotated to the first target position (180°) within the second preset duration by using the rotating magnetic field generated by the stator;
   c. after the rotor is rotated to the first target position, the vehicle control unit immediately sends the instruction to the brake system. After the brake system receives the instruction, immediately start the electric parking brake and engage into the parking gear, to ensure that the automobile is in the locked state; and
   d. the vehicle control unit switches the working mode of the drive motor to the boost charging mode, sets the charging current to the normal charging current, and maintains the normal charging current until boost charging is stopped. Specifically, the vehicle control unit sends the instruction to the motor control unit. After receiving the instruction, the motor control unit switches the working mode of the drive motor to the boost charging mode, and sets the charging current to the normal charging current.
(6) After receiving an instruction of stopping boost charging from a user, the vehicle control unit linearly reduces the charging current to zero. Specifically, the vehicle control unit linearly reduces the charging current to zero by using the motor control unit, and then the motor control unit exits the boost charging mode, so that the drive motor also exits the boost charging mode.

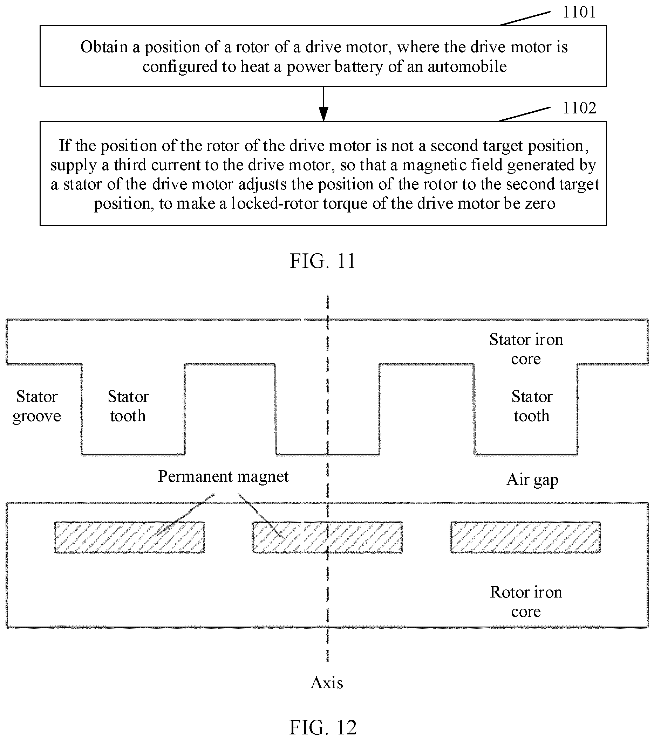

FIG. 11 is a schematic flowchart of another control method for a drive motor of an automobile according to an embodiment of this application. The control method for the drive motor of the automobile is described as a series of steps or operations. It should be understood that the control method for the drive motor of the automobile may be performed in various sequences and/or simultaneously, and is not limited to the execution sequence shown in FIG. 11. In addition, the control method for the drive motor of the automobile shown in FIG. 11 may be implemented based on the drive circuit or the power battery heating circuit shown in FIG. 6. The control method for the drive motor of the automobile may be executed by a control device, for example, the vehicle control unit applied to the boost charging system shown in FIG. 8. The control method for the drive motor of the automobile includes but is not limited to the following steps or operations.

Step 1101: Obtain a position of a rotor of the drive motor, where the drive motor is configured to heat a power battery of the automobile.

Step 1102: If the position of the rotor of the drive motor is not a second target position, supply a third current to the drive motor, so that a magnetic field generated by a stator of the drive motor adjusts the position of the rotor to the second target position, to make a locked-rotor torque of the drive motor be zero.

It should be noted that, when the drive motor is normally driven, currents of three phase windings of the stator are sinusoidal alternating currents with the three phase windings staggered electrically by 120°, so that a composite vector of a magnetic field generated by the three phase windings rotates. When the drive motor is in a working condition of locked-rotor such as power battery heating, the currents of the three phase windings of the stator are direct current flowing with the three phase windings staggered electrically by 120°, and the composite vector of the magnetic field generated by the three phase windings is equivalent to being fixed at a specific moment. Therefore, the magnetic field generated by the stator is static. Therefore, when the third current is supplied, the magnetic field generated by the stator is a static magnetic field.

In this embodiment of this application, when the drive motor is configured to heat the power battery, the drive motor is in a locked-rotor state. The drive motor has no locked-rotor torque provided that the position of the rotor is controlled to be the same as a stator magnetic vector. That the position of the rotor is the same as the stator magnetic vector means that when the position of the rotor and a direction of the magnetic field generated by the stator are also represented by electrical angles, the electrical angles corresponding to the two are the same. Therefore, when the third current is supplied to the drive motor, the magnetic field generated by the stator attracts the rotor, so that the rotor is rotated to a position in a same direction as the magnetic field generated by the stator. This releases the locked-rotor torque of the drive motor.

In a possible implementation, when the position of the rotor is the second target position, an included angle of an electrical angle between an axis of one magnetic pole of the rotor and an axis of one tooth of the stator is 0°.

The included angle of the electrical angle between the axis of the magnetic pole of the rotor and the axis of the tooth of the stator is 0°. That is, the axis of the magnetic pole of the rotor coincides with the axis of the tooth of the stator, as shown in FIG. 12.

In this implementation, because the rotor of the drive motor is a permanent magnet, a tooth groove torque is produced between the stator and the rotor, and the tooth groove torque causes a rotational speed of the drive motor to fluctuate around zero. Therefore, the drive motor cannot be completely locked. However, in this application, when the rotor is rotated to the second target position by using the magnetic field generated by the stator, the included angle of the electrical angle between the axis of the magnetic pole of the rotor and the axis of the tooth of the stator is 0°. In this case, no tooth groove torque is produced between the rotor and the stator. In this way, when the power battery is heated, not only the locked-rotor torque of the drive motor, but also the tooth groove torque can be released.

In a possible implementation, an included angle of an electrical angle between the direction of the magnetic field generated by the stator and the axis of the tooth of the stator is 0°.

In this implementation, when the third current is supplied to the drive motor, the included angle of the electrical angle between the direction of the magnetic field generated by the stator and the axis of the tooth of the stator is 0°. In this case, the magnetic field generated by the stator attracts the rotor, and the rotor moves towards the direction of the magnetic field generated by the stator, so that the included angle of the electrical angle between the axis of the magnetic pole of the rotor and the axis of the tooth of the stator is 0°.

In a possible implementation, an electrical angle of the axis of the tooth of the stator is kβ, β is a tooth groove angle, 0 ≤ k ≤ z/p, k is an integer, p is a quantity of motor pole pairs of the drive motor, and z is a quantity of grooves of the stator of the drive motor.

The second target position is a discrete sequence, and is 0, β, 2β, ..., kβ, ..., and 360° on a plane of 360° electrical angle. β is the tooth groove angle, and values of the tooth groove angle β varies with drive motors. For example, (1) when a drive motor is 6-pole 54-groove (a quantity of rotor poles is 6, and a quantity of grooves of a stator is 54, 6p54s for short), 8p72s, or the like, the tooth groove angle β = 20°; (2) When a drive motor is 6p36s, 8p48s, or the like, the tooth groove angle β = 30°.

In this implementation, when the position of the rotor is kβ, there is no tooth groove torque between the rotor and the stator. β is the tooth groove angle, 0 ≤ k ≤ z/p, k is the integer, p is the quantity of motor pole pairs of the drive motor, and z is the quantity of grooves of the stator of the drive motor. Therefore, the electrical angle of the axis of the tooth of the stator may be set to kβ, so that when the rotor is at the second target position, there is no tooth groove torque between the rotor and the stator.

According to the invention, before the supplying a third current to the drive motor, so that a magnetic field generated by a stator of the drive motor adjusts the position of the rotor to the second target position, to make a locked-rotor torque of the drive motor be zero, the method further includes: starting an electric parking brake of the automobile, and exiting a parking gear of the automobile.

In this implementation, because the automobile is stationary when being charged, the automobile may be engaged into the parking gear. However, when the automobile is engaged into the parking gear, the rotor of the drive motor may be locked and cannot be rotated. Therefore, start the electric parking brake instead of the parking gear to lock the automobile, and exit the parking gear, so that the rotor can be attracted by the magnetic field generated by the stator, and is rotated to the second target position.

According to the invention, the method further includes: if the third current is supplied to the drive motor, but the position of the rotor is not adjusted to the second target position, releasing the electric parking brake of the automobile within third preset duration, so that the locked-rotor torque of the drive motor adjusts the position of the rotor to the second target position.

In this implementation, the magnetic field generated by the stator may fail to rotate the rotor to the second target position due to impact of a tooth side gap. In this case, the electric parking brake of the automobile may be released, so that the automobile is not locked, and the rotor may be rotated under an action of the locked-rotor torque. In addition, the third preset duration for releasing the electric parking brake is set, and the locked-rotor torque may rotate the rotor to the second target position.

In a possible implementation, the method further includes: supplying a fourth current to the drive motor, so that the drive motor heats the power battery.

In this implementation, when the rotor is at the second target position, there is no tooth groove torque between the stator and the rotor, and the fourth current is supplied to the drive motor to heat the power battery, so that the automobile does not jitter, and driving experience is not affected.

The following further describes, by using example 3, the control method for the drive motor described in FIG. 11.

### Example 3:

In Example 3, the circuit shown in FIG. 6 is used for heating a power battery of an automobile. Specifically, a motor control unit controls currents of three phase windings of a stator of a drive motor, so that the stator generates a magnetic field to adjust a position of a rotor, and a brake system cooperates with the action, to control a locked-rotor torque to be zero. In addition, after the position of the rotor is adjusted, an axis of one magnetic pole of the rotor is aligned with one tooth of the stator. That is, an included angle of an electrical angle between the axis of the magnetic pole of the rotor and an axis of the tooth of the stator is 0°, to control a tooth groove torque to be zero. Relative positions of the drive motor, a parking gear in a speed reducer, a wheel, and an electric parking brake of the automobile are shown in FIG. 10. A specific implementation process of Example 3 is as follows.
(1) A vehicle control unit starts a power battery heating mode of the drive motor, and obtains that an initial position of the rotor is 15°. It is assumed that the drive motor is a drive motor of 6p54s, a second target position may be 0°, 20°, 40°, ..., or 360°. Because the initial position of the rotor is 15°, the second target position is set to 20° according to a principle of selecting the near. The initial position of the rotor may be obtained in the following manner: The vehicle control unit sends an instruction to the motor control unit. After receiving the instruction, the motor control unit obtains that the initial position of the rotor is 15°, and sends the obtained initial position of the rotor to the vehicle control unit.
(2) The vehicle control unit sends the instruction to the brake system. After the brake system receives the instruction, exit the parking gear and start the electric parking brake. It should be understood that, in this case, the automobile is still in a locked state.
(3) The vehicle control unit sets a heating current to a third current, and the drive motor generates a stator magnetic vector (that is, a static magnetic field generated by the stator). The stator magnetic vector attracts the rotor to adjust the position of the rotor. Then, the position of the rotor is obtained again. Specifically, the vehicle control unit sends the instruction to the motor control unit. After receiving the instruction, the motor control unit sets the heating current to the third current, obtains the position of the rotor again, and sends the obtained position of the rotor to the vehicle control unit. The heating current is also a current used for heating the power battery of the automobile. The third current may be slightly less than a normal heating current (that is, a fourth current).
(4) If the rotor is rotated to the second target position, that is, the position of the rotor is 20°, the vehicle control unit sets the heating current to the normal heating current (that is, the fourth current), and maintains the normal heating current until power battery heating is stopped. Specifically, the vehicle control unit sends the instruction to the motor control unit. After receiving the instruction, the motor control unit sets the heating current to the normal heating current.
(5) If the rotor is not rotated to the second target position, that is, the position of the rotor is not 20°,
   a. the vehicle control unit sends the instruction to the brake system, and after the brake system receives the instruction, release a third preset duration for the electric parking brake temporarily, where a value of the third preset duration is determined according to a specific control strategy;
   b. keep the heating current being the third current unchanged, and pull the rotor/a tire within the third preset duration by using the locked-rotor torque, so that the rotor is rotated to the second target position;
   c. after the rotor is rotated to the second target position, the vehicle control unit immediately sends the instruction to the brake system. After the brake system receives the instruction, immediately start the electric parking brake and engage into the parking gear, to ensure that the automobile is in the locked state; and
   d. the vehicle control unit sets the heating current to the normal heating current and maintains the normal heating current until power battery heating is stopped. Specifically, the vehicle control unit sends the instruction to the motor control unit. After receiving the instruction, the motor control unit sets the heating current to the normal heating current.
(6) After receiving an instruction of stopping power battery heating from a user, the vehicle control unit linearly reduces the heating current to zero. Specifically, the vehicle control unit linearly reduces the heating current to zero by using the motor control unit, and then the motor control unit exits the power battery heating mode, so that the drive motor also exits the power battery heating mode.

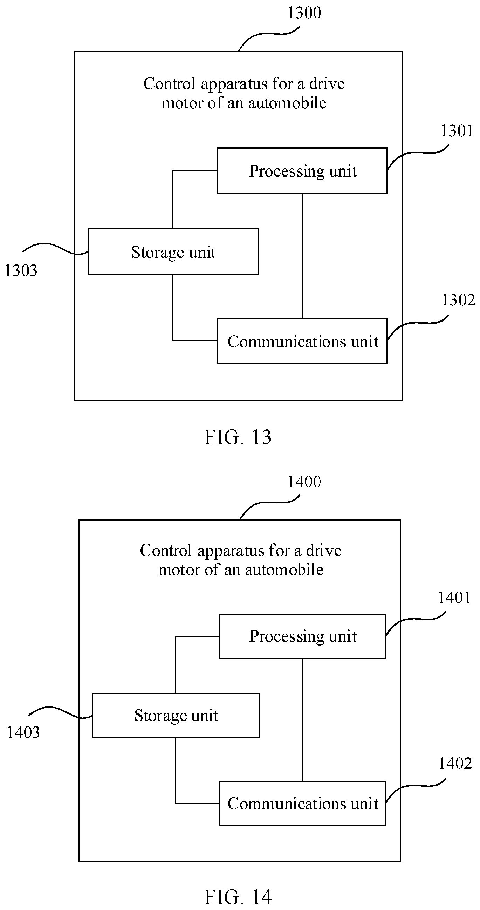

FIG. 13 is a schematic diagram of a structure of a control apparatus for a drive motor of an automobile according to an embodiment of this application. The control apparatus 1300 for the drive motor of the automobile is applied to a control device. The control apparatus 1300 for the drive motor of the automobile includes a processing unit 1301 and a communications unit 1302. The processing unit 1301 is configured to perform any step in the method embodiment shown in FIG. 9, and when performing data transmission such as obtaining, the communications unit 1302 may be selectively invoked to complete a corresponding operation. Details are described in the following.

In a possible implementation, a stator of the drive motor includes a first phase winding, a second phase winding, and a third phase winding. The processing unit 1301 is configured to obtain a position of a rotor of the drive motor, where the first phase winding is connected in parallel to the second phase winding, the first phase winding is connected in series to the third phase winding, and the second phase winding is connected in series to the third phase winding; and the drive motor is in a boost charging mode, and is configured to charge a power battery of the automobile after boosting a charging voltage; and if the position of the rotor is not a first target position, supply a first current to the drive motor, so that a magnetic field generated by the stator adjusts the position of the rotor to the first target position, to make a locked-rotor torque of the drive motor be zero.

In a possible implementation, when the position of the rotor is the first target position, an included angle of an electrical angle between a direct axis of the drive motor and an axis of the third phase winding is 0° or 180°.

In a possible implementation, before the supplying a first current to the drive motor, so that a magnetic field generated by the stator adjusts the position of the rotor to the first target position, to make a locked-rotor torque of the drive motor be zero, the processing unit 1301 is further configured to: start an electric parking brake of the automobile, and exit a parking gear of the automobile.

In a possible implementation, the processing unit 1301 is further configured to: if the first current is supplied to the drive motor, but the position of the rotor is not adjusted to the first target position, release the electric parking brake of the automobile within first preset duration, so that the locked-rotor torque of the drive motor adjusts the position of the rotor to the first target position.

In a possible implementation, the processing unit 1301 is further configured to: if the first current is supplied to the drive motor or the electric parking brake of the automobile is released within the first preset duration, but the position of the rotor is not adjusted to the first target position, switch a working mode of the drive motor to a drive mode, so that the power battery supplies power to the drive motor; release the electric parking brake of the automobile within second preset duration, so that the magnetic field generated by the stator adjusts the position of the rotor to the first target position; and after the position of the rotor is adjusted to the first target position, switch the working mode of the drive motor to the boost charging mode.

In a possible implementation, the processing unit 1301 is further configured to: supply a second current to the drive motor, so that the drive motor charges the power battery after boosting the charging voltage.

The control apparatus 1300 for the drive motor of the automobile may further include a storage unit 1303, configured to store program code and data of the control device. The processing unit 1301 may be a processor, the communications unit 1302 may be a transceiver, and the storage unit 1303 may be a memory.

It should be noted that, for implementation of the units of the control apparatus 1300 for the drive motor of the automobile described in FIG. 13, refer to corresponding descriptions in the method embodiment shown in FIG. 9. In addition, for beneficial effects brought by the control apparatus 1300 for the drive motor of the automobile described in FIG. 13, refer to corresponding descriptions in the method embodiment shown in FIG. 9. Details are not described herein again.

FIG. 14 is a schematic diagram of a structure of a control apparatus for a drive motor of an automobile according to an embodiment of this application. The control apparatus 1400 for the drive motor of the automobile is applied to a control device. The control apparatus 1400 for the drive motor of the automobile includes a processing unit 1401 and a communications unit 1402. The processing unit 1401 is configured to perform any step in the method embodiment shown in FIG. 11, and when performing data transmission such as obtaining, the communications unit 1402 may be selectively invoked to complete a corresponding operation. Details are described in the following.

In a possible implementation, the drive motor is configured to heat a power battery of the automobile. The processing unit 1401 is configured to: obtain a position of a rotor of the drive motor; and if the position of the rotor of the drive motor is not a second target position, supply a third current to the drive motor, so that a magnetic field generated by a stator of the drive motor adjusts the position of the rotor to the second target position, to make a locked-rotor torque of the drive motor be zero.

In a possible implementation, when the position of the rotor is the second target position, an included angle of an electrical angle between an axis of one magnetic pole of the rotor and an axis of one tooth of the stator is 0°.

In a possible implementation, an included angle of an electrical angle between a direction of the magnetic field generated by the stator and the axis of the tooth of the stator is 0°.

In a possible implementation, an electrical angle of the axis of the tooth of the stator is kβ, β is a tooth groove angle, 0 ≤ k ≤ z/p, k is an integer, p is a quantity of motor pole pairs of the drive motor, and z is a quantity of grooves of the stator of the drive motor.

In a possible implementation, before the supplying a third current to the drive motor, so that a magnetic field generated by a stator of the drive motor adjusts the position of the rotor to the second target position, to make a locked-rotor torque of the drive motor be zero, the processing unit 1401 is further configured to: start an electric parking brake of the automobile, and exit a parking gear of the automobile.

In a possible implementation, the processing unit 1401 is further configured to: if the third current is supplied to the drive motor, but the position of the rotor is not adjusted to the second target position, release the electric parking brake of the automobile within third preset duration, so that the locked-rotor torque of the drive motor adjusts the position of the rotor to the second target position.

In a possible implementation, the processing unit 1401 is further configured to: supply a fourth current to the drive motor, so that the drive motor heats the power battery.

The control apparatus 1400 for the drive motor of the automobile may further include a storage unit 1403, configured to store program code and data of the control device. The processing unit 1401 may be a processor, the communications unit 1402 may be a transceiver, and the storage unit 1403 may be a memory.

It should be noted that, for implementation of the units of the control apparatus 1400 for the drive motor of the automobile described in FIG. 14, refer to corresponding descriptions in the method embodiment shown in FIG. 11. In addition, for beneficial effects brought by the control apparatus 1400 for the drive motor of the automobile described in FIG. 14, refer to corresponding descriptions in the method embodiment shown in FIG. 11. Details are not described herein again.

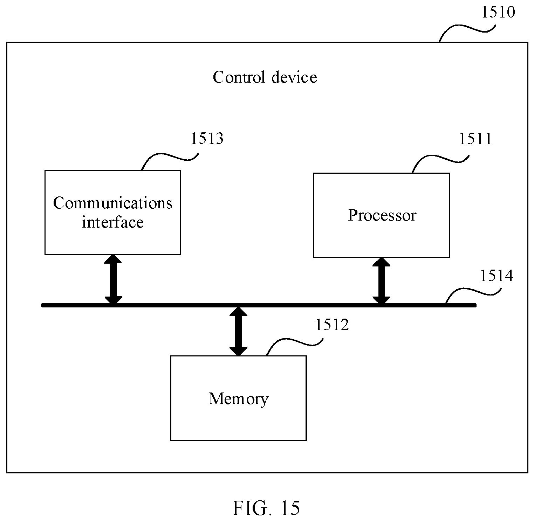

FIG. 15 is a schematic diagram of a structure of a control device 1510 according to an embodiment of this application. The control device 1510 includes a processor 1511, a memory 1512, and a communications interface 1513. The processor 1511, the memory 1512, and the communications interface 1513 are connected to each other through a bus 1514.

The memory 1512 includes but is not limited to a random access memory (RAM), a read-only memory (ROM), an erasable programmable read-only memory (EPROM), or a compact disc read-only memory (CD-ROM). The memory 1512 is configured to store a related computer program and data. The communications interface 1513 is configured to receive and send data.

The processor 1511 may be one or more central processing units (CPU). When the processor 1511 is one CPU, the CPU may be a single-core CPU, or may be a multi-core CPU.

The processor 1511 in the control device 1510 is configured to read computer program code stored in the memory 1512, to perform the method shown in FIG. 9 or FIG. 11.

It should be noted that, for implementation of the operations of the control device 1510 described in FIG. 15, refer to corresponding descriptions in the method embodiment shown in FIG. 9 or FIG. 11. In addition, for beneficial effects brought by the control device 1510 described in FIG. 15, refer to corresponding descriptions of the method embodiment shown in FIG. 9 or FIG. 11. Details are not described herein again.

This application provides a transmission gearbox of an automobile. The automobile includes a drive motor. The transmission gearbox includes a ratchet and a pawl. A quantity of grooves of the ratchet is the same as a quantity of motor pole pairs of the drive motor or the quantity of grooves of the ratchet is twice the quantity of motor pole pairs of the drive motor. When the pawl is clamped into any groove of the ratchet, an included angle of an electrical angle between a direct axis of the drive motor and a direction of a magnetic field generated by a stator is 0° or 180°.

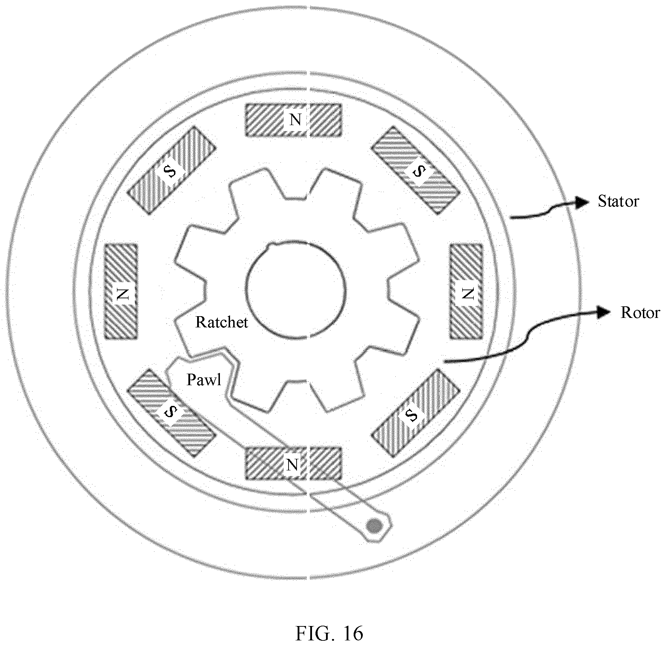

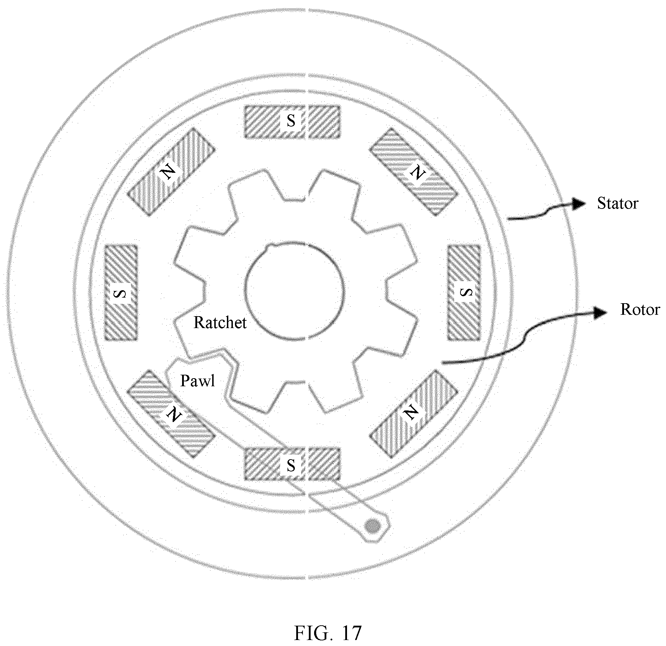

As shown in FIG. 16 and FIG. 17, the quantity of grooves of the ratchet is set to be the same as the quantity of motor pole pairs (or referred to as rotor levels) of the drive motor, or the quantity of grooves of the ratchet is set to be twice the quantity of motor pole pairs of the drive motor, and the ratchet is coaxially connected to an output shaft of the rotor. At the same time, the ratchet and the pawl of the transmission gearbox are installed at a fixed angle, to perform charging when the rotor is at a fixed angle. Specifically, the ratchet is installed in alignment with the rotor at a position, and the pawl is installed in alignment with the stator at a position. In this case, when the automobile is stopped, the pawl is clamped into the ratchet, so that relative positions of the stator and the rotor are fixed. That is, an included angle of an electrical angle between a direct axis of the drive motor (or referred to as a direct axis of the rotor) and a stator magnetic vector (or a direction of a magnetic field generated by the stator) is 0° or 180°, and then charging is started, that is, charged at a fixed angle.

Specifically, as shown in FIG. 16 and FIG. 17, during installation, an axis of the any groove of the ratchet may be aligned with one magnetic pole of the rotor by using a keyway or by marking, that is, to make the axis of the any groove of the ratchet coincide with an axis of the magnetic pole of the rotor. In addition, the pawl is installed in alignment with the stator at a specific position by fixing an angle at which the stator performs heat shrink fitting and by using the keyway or by marking. In this way, each time a parking gear is engaged, the rotor is located just at a position whose torque is zero. This can release a locked-rotor torque. If a parking gear is not engaged, when the locked-rotor torque is produced, either the torque is small and does not affect a brake system, or the torque is sufficient so that the pawl is engaged into a ratchet groove to reach the position of zero torque.

It should be noted that this implementation may be used independently, so that the locked-rotor torque of the drive motor is zero during boost charging. Alternatively, this implementation may be used together with the foregoing other implementations, to additionally ensure that the locked-rotor torque of the drive motor is zero during boost charging.

In this embodiment of this application, the quantity of grooves of the ratchet of the transmission gearbox of the automobile is set to be the same as the quantity of motor pole pairs of the drive motor, or is twice the quantity of motor pole pairs of the drive motor. When the ratchet and the pawl are installed, the pawl is installed in alignment with the stator at a position, and the ratchet is installed in alignment with the rotor at a position. In this case, when the automobile is stopped, the pawl is clamped into the ratchet, so that relative positions of the stator and the rotor are fixed. Therefore, when the pawl is clamped into any groove of the ratchet, the included angle of the electrical angle between the direct axis of the drive motor and the direction of the magnetic field generated by the stator is 0° or 180°, so that there is no locked-rotor torque in the drive motor after the automobile is stopped.

This application provides another transmission gearbox of an automobile. The automobile includes a drive motor. The transmission gearbox includes a ratchet and a pawl. A quantity of grooves of the ratchet is kp, 1 ≤k ≤ z/p, k is an integer, p is a quantity of motor pole pairs of the drive motor, and z is a quantity of grooves of a stator of the drive motor. When the pawl is clamped into any groove of the ratchet, an included angle of an electrical angle between an axis of one magnetic pole of a rotor and an axis of one tooth of the stator is 0°.

The quantity of grooves of the ratchet is set to kp, 1 ≤k ≤ z/p, k is the integer, p is the quantity of motor pole pairs of the drive motor, z is the quantity of grooves of the stator of the drive motor, and the ratchet is coaxially connected to an output shaft of the rotor. At the same time, the ratchet and the pawl of the transmission gearbox are installed at a fixed angle, to perform heating a power battery when the rotor is at a fixed angle. Specifically, the ratchet is installed in alignment with the rotor at a position, and the pawl is installed in alignment with the stator at a position. In this case, when the automobile is stopped, the pawl is clamped into the ratchet, so that relative positions of the stator and the rotor are fixed. That is, the included angle of the electrical angle between the axis of the magnetic pole of the rotor and the axis of the tooth of the stator is 0°, then power battery heating is started, that is, the power battery is heated at the fixed angle.

Specifically, during installation, an axis of the any groove of the ratchet may be aligned with the magnetic pole of the rotor by using a keyway or by marking, that is, to make the axis of the any groove of the ratchet coincide with the axis of the magnetic pole of the rotor. In addition, the pawl is installed in alignment with the stator at a specific position by fixing an angle at which the stator performs heat shrink fitting and by using the keyway or by marking. In this way, each time a parking gear is engaged, the axis of the magnetic pole of the rotor is aligned with the tooth of the stator. That is, the included angle of the electrical angle between the axis of the magnetic pole of the rotor and the axis of the tooth of the stator is 0°. This can release a locked-rotor torque and a tooth groove torque.

It should be noted that this implementation may be used independently, so that the locked-rotor torque and the tooth groove torque of the drive motor are zero when the power battery is heated. Alternatively, this implementation may be used together with the foregoing other implementations, to additionally ensure that the locked-rotor torque and the tooth groove torque of the drive motor are zero when the power battery is heated.

In this embodiment of this application, the quantity of grooves of the ratchet of the transmission gearbox of the automobile is set to kp, where 1 ≤ k≤ z/p, k is the integer, p is the quantity of motor pole pairs of the drive motor, and z is the quantity of grooves of the stator of the drive motor. When the ratchet and the pawl are installed, the pawl is installed in alignment with the stator at a position, and the ratchet is installed in alignment with the rotor at a position. In this case, when the automobile is stopped, the pawl is clamped into the ratchet, so that relative positions of the stator and the rotor are fixed. Therefore, when the pawl is clamped into any groove of the ratchet, the included angle of the electrical angle between the axis of the magnetic pole of the rotor and the axis of the tooth of the stator is 0°, so that there is no tooth groove torque between the stator and the rotor after the automobile is stopped.

An embodiment of this application further provides a chip. The chip includes at least one processor, a memory, and an interface circuit. The memory, the transceiver, and the at least one processor are interconnected through a line. The at least one memory stores a computer program. When the computer program is executed by the processor, the method procedure shown in FIG. 9 or FIG. 11 is implemented.

An embodiment of this application further provides a computer-readable storage medium. The computer-readable storage medium stores a computer program. When the computer program is run on a computer, the method procedure shown in FIG. 9 or FIG. 11 is implemented.

An embodiment of this application further provides a computer program product. When the computer program product is run on a computer, the method procedure shown in FIG. 9 or FIG. 11 is implemented.

It should be understood that, the processor mentioned in embodiments of this application may be a central processing unit (CPU), or may be another general-purpose processor, a digital signal processor (DSP), an application-specific integrated circuit (ASIC), a field programmable gate array (FPGA), another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. By way of example, but not limitation, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

It should be noted that when the processor is a general-purpose processor, a DSP, an ASIC, an FPGA, another programmable logic device, a discrete gate or transistor logic device, or a discrete hardware component, the memory (a storage module) is integrated into the processor.

It should be noted that the memory described in this specification aims to include but is not limited to these memories and any memory of another proper type.

It should be further understood that "first", "second", "third", "fourth", and various numbers in this specification are merely used for differentiation for ease of description, and are not construed as a limitation to the scope of this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or another form.

The foregoing units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

A sequence of the steps of the method in embodiments of this application may be adjusted, combined, or removed based on an actual requirement.

The modules in the apparatus in embodiments of this application may be combined, divided, and deleted based on an actual requirement.

## Claims

1. A control apparatus (1300) for a drive motor of an automobile, wherein a stator of the drive motor comprises a first phase winding, a second phase winding, and a third phase winding, and the apparatus (1300) comprises
a processing unit (1301), configured to
obtain (901) a position of a rotor of the drive motor. wherein one end of each phase winding is connected to one of three-phase bridge arms, and another end of each phase winding are connected, and the drive motor is in a boost charging mode, and configured to charge a power battery of the automobile after boosting a charging voltage;
the control apparatus (1300) is **characterized in that**
the processing unit (1301) is configured to:
if the position of the rotor is not a first target position, start an electric parking brake of the automobile and exit a parking gear of the automobile, before supplying a first current to the drive motor, and
if the position of the rotor is not adjusted to the first target position after the first current is supplied to the drive motor, release the electric parking brake of the automobile within a first preset duration so that a magnetic field generated by the stator adjusts the position of the rotor to the first target position, to make a locked-rotor torque of the drive motor be zero.

2. The apparatus according to claim 1, wherein when the position of the rotor is the first target position, an included angle of an electrical angle between a direct axis of the drive motor and an axis of the third phase winding is 0° or 180°.

3. The apparatus (1300) according to claim 1, wherein the processing unit (1301) is further configured to: if the first current is supplied to the drive motor or the electric parking brake of the automobile is released within the first preset duration, but the position of the rotor is not adjusted to the first target position, switch a working mode of the drive motor to a drive mode, so that the power battery supplies power to the drive motor;
release the electric parking brake of the automobile within second preset duration, so that the magnetic field generated by the stator adjusts the position of the rotor to the first target position; and
after the position of the rotor is adjusted to the first target position, switch the working mode of the drive motor to the boost charging mode.

4. The apparatus (1300) according to any one of claims 1 to 3, wherein the processing unit (1301) is further configured to:
supply a second current to the drive motor, so that the drive motor charges the power battery after boosting the charging voltage.

5. A control apparatus (1400) for a drive motor of an automobile, wherein the drive motor is configured to heat a power battery of the automobile, and the apparatus comprises
a processing unit (1401), configured to
obtain (1101) a position of a rotor of the drive motor;
the control apparatus (1400) is **characterized in that**
the processing unit (1401) is configured to:
if the position of the rotor of the drive motor is not a second target position, start an electric parking brake of the automobile, and exit a parking gear of the automobile before supplying a third current to the drive motor, and
if the position of the rotor is not adjusted to the second target position after the third current is supplied to the drive motor,
release the electric parking brake of the automobile within third preset duration so that a magnetic field generated by a stator of the drive motor adjusts the position of the rotor to the second target position, to make a locked-rotor torque of the drive motor be zero.

6. The apparatus according to claim 5, wherein when the position of the rotor is the second target position, an included angle of an electrical angle between an axis of one magnetic pole of the rotor and an axis of one tooth of the stator is 0°.

7. The apparatus according to claim 5 or 6, wherein an included angle of an electrical angle between a direction of the magnetic field generated by the stator and the axis of the tooth of the stator is 0°.

8. The apparatus according to any one of claims 5 to 7, wherein an electrical angle of the axis of the tooth of the stator is k•β, β is a tooth groove angle given by β = p · 360/z , 0 ≤ k ≤ z/p, k is an integer, p is a quantity of motor pole pairs of the drive motor, and z is a quantity of grooves of the stator of the drive motor.

9. The apparatus according to any one of claims 5 to 8, wherein the processing unit (1401) is further configured to:
supply a fourth current to the drive motor, so that the drive motor heats the power battery.

10. A transmission gearbox of an automobile, wherein the automobile comprises a drive motor, the transmission gearbox comprises a ratchet and a pawl, **characterized in that** the quantity of grooves of the ratchet is the same as a quantity of motor pole pairs of the drive motor or the quantity of grooves of the ratchet is twice the quantity of motor pole pairs of the drive motor, and an axis of any groove of the ratchet is aligned with one magnetic pole of the rotor and the pawl is installed in alignment with the stator; and
when the pawl is clamped into any groove of the ratchet, an included angle of an electrical angle between a direct axis of the drive motor and a direction of a magnetic field generated by a stator is 0° or 180°.

11. A transmission gearbox of an automobile, wherein the automobile comprises a drive motor, the transmission gearbox comprises a ratchet and a pawl, **characterized in that** the quantity of grooves of the ratchet is k·p, 1 ≤k ≤ z/p, k is an integer, p is a quantity of motor pole pairs of the drive motor, and z is a quantity of grooves of a stator of the drive motor, and an axis of any groove of the ratchet is aligned with one magnetic pole of the rotor and the pawl is installed in alignment with the stator; and
when the pawl is clamped into any groove of the ratchet, an included angle of an electrical angle between an axis of one magnetic pole of a rotor and an axis of one tooth of the stator is 0°.

## Patentansprüche

1. Steuervorrichtung (1300) für einen Antriebsmotor eines Kraftfahrzeugs, wobei ein Stator des Antriebsmotors eine erste Phasenwicklung, eine zweite Phasenwicklung und eine dritte Phasenwicklung umfasst und die Vorrichtung (1300) Folgendes umfasst
eine Verarbeitungseinheit (1301), die zu Folgendem konfiguriert ist
Erlangen (901) einer Position eines Rotors des Antriebsmotors, wobei ein Ende jeder Phasenwicklung mit einem von dreiphasigen Brückenarmen verbunden ist und ein anderes Ende jeder Phasenwicklung verbunden ist und sich der Antriebsmotor in einem Schnelllademodus befindet und dazu konfiguriert ist, eine Leistungsbatterie des Kraftfahrzeugs nach Schnellladen einer Ladespannung aufzuladen;
die Steuervorrichtung (1300) **dadurch gekennzeichnet ist, dass** die Verarbeitungseinheit (1301) zu Folgendem konfiguriert ist:
falls die Position des Rotors keine erste Zielposition ist, Starten einer elektrischen Parkbremse des Kraftfahrzeugs und Verlassen eines Parkzahnrads des Kraftfahrzeugs vor Zuführen eines ersten Stroms zu dem Antriebsmotor und
falls die Position des Rotors nicht auf die erste Zielposition eingestellt ist, nachdem der erste Strom dem Antriebsmotor zugeführt ist, Lösen der elektrischen Parkbremse des Kraftfahrzeugs innerhalb einer ersten voreingestellten Dauer, sodass ein magnetisches Feld, das durch den Stator erzeugt wird, die Position des Rotors auf die erste Zielposition einstellt, um ein Blockierdrehmoment des Antriebsmotors auf null zu bringen.

2. Vorrichtung nach Anspruch 1, wobei, wenn die Position des Rotors die erste Zielposition ist, ein eingeschlossener Winkel eines elektrischen Winkels zwischen einer direkten Achse des Antriebsmotors und einer Achse der dritten Phasenwicklung 0° oder 180° ist.

3. Vorrichtung (1300) nach Anspruch 1, wobei die Verarbeitungseinheit (1301) ferner zu Folgendem konfiguriert ist: falls der erste Strom dem Antriebsmotor zugeführt wird oder die elektrische Parkbremse des Kraftfahrzeugs innerhalb der ersten voreingestellten Dauer gelöst wird, jedoch die Position des Rotors nicht auf die erste Zielposition eingestellt wird, Umschalten eines Arbeitsmodus des Antriebsmotors in einen Antriebsmodus, sodass die Leistungsbatterie dem Antriebsmotor Leistung zuführt;
Lösen der elektrischen Parkbremse des Kraftfahrzeugs innerhalb einer zweiten voreingestellten Dauer, sodass das magnetische Feld, das durch den Stator erzeugt wird, die Position des Rotors auf die erste Zielposition einstellt; und
nachdem die Position des Rotors auf die erste Zielposition eingestellt ist, Umschalten des Arbeitsmodus des Antriebsmotors in den Schnelllademodus.

4. Vorrichtung (1300) nach einem der Ansprüche 1 bis 3, wobei die Verarbeitungseinheit (1301) ferner zu Folgendem konfiguriert ist:
Zuführen eines zweiten Stroms zu dem Antriebsmotor, sodass der Antriebsmotor die Leistungsbatterie nach dem Schnellladen der Ladespannung auflädt.

5. Steuervorrichtung (1400) für einen Antriebsmotor eines Kraftfahrzeugs, wobei der Antriebsmotor dazu konfiguriert ist, eine Leistungsbatterie des Kraftfahrzeugs zu erwärmen, und die Vorrichtung Folgendes umfasst
eine Verarbeitungseinheit (1401), die zu Folgendem konfiguriert ist
Erlangen (1101) einer Position eines Rotors des Antriebsmotors;
die Steuervorrichtung (1400) **dadurch gekennzeichnet ist, dass** die Verarbeitungseinheit (1401) zu Folgendem konfiguriert ist:
falls die Position des Rotors des Antriebsmotors keine zweite Zielposition ist, Starten einer elektrischen Parkbremse des Kraftfahrzeugs und Verlassen eines Parkzahnrads des Kraftfahrzeugs vor Zuführen eines dritten Stroms zu dem Antriebsmotor und
falls die Position des Rotors nicht auf die zweite Zielposition eingestellt ist, nachdem der dritte Strom dem Antriebsmotor zugeführt ist,
Lösen der elektrischen Parkbremse des Kraftfahrzeugs innerhalb einer dritten voreingestellten Dauer, sodass ein magnetisches Feld, das durch einen Stator des Antriebsmotors erzeugt wird, die Position des Rotors auf die zweite Zielposition einstellt, um ein Blockierdrehmoment des Antriebsmotors auf null zu bringen.

6. Vorrichtung nach Anspruch 5, wobei, wenn die Position des Rotors die zweite Zielposition ist, ein eingeschlossener Winkel eines elektrischen Winkels zwischen einer Achse eines Magnetpols des Rotors und einer Achse eines Zahns des Stators 0° ist.

7. Vorrichtung nach Anspruch 5 oder 6, wobei ein eingeschlossener Winkel eines elektrischen Winkels zwischen einer Richtung des magnetischen Felds, das durch den Stator erzeugt wird, und der Achse des Zahns des Stators 0° ist.

8. Vorrichtung nach einem der Ansprüche 5 bis 7, wobei ein elektrischer Winkel der Achse des Zahns des Stators k • β ist, β ein Zahnnutwinkel ist, der durch β = p · 360/z gegeben ist, 0 ≤ k ≤ z/p, k eine Ganzzahl ist, p eine Anzahl an Motorpolpaaren des Antriebsmotors ist und z eine Anzahl an Nuten des Stators des Antriebsmotors ist.

9. Vorrichtung nach einem der Ansprüche 5 bis 8, wobei die Verarbeitungseinheit (1401) ferner zu Folgendem konfiguriert ist:
Zuführen eines vierten Stroms zu dem Antriebsmotor, sodass der Antriebsmotor die Leistungsbatterie erwärmt.

10. Getriebe eines Kraftfahrzeugs, wobei das Kraftfahrzeug einen Antriebsmotor umfasst, das Getriebe eine Ratsche und eine Sperrklinke umfasst, **dadurch gekennzeichnet, dass** die Anzahl an Nuten der Ratsche die gleiche wie eine Anzahl an Motorpolpaaren des Antriebsmotors ist oder die Anzahl an Nuten der Ratsche zweimal die Anzahl an Motorpolpaaren des Antriebsmotors ist und eine Achse einer beliebigen Nut der Ratsche mit einem Magnetpol des Rotors ausgerichtet ist und die Sperrklinke in Ausrichtung mit dem Stator installiert ist; und
wenn die Sperrklinke in eine beliebige Nut der Ratsche eingeklemmt ist, ein eingeschlossener Winkel eines elektrischen Winkels zwischen einer Direktachse des Antriebsmotors und einer Richtung eines magnetischen Felds, das durch einen Stator erzeugt wird, 0° oder 180° ist.

11. Getriebe eines Kraftfahrzeugs, wobei das Kraftfahrzeug einen Antriebsmotor umfasst, das Getriebe eine Ratsche und eine Sperrklinke umfasst, **dadurch gekennzeichnet, dass** die Anzahl an Nuten der Ratsche k ·p ist, 1 ≤k ≤ z/p, k eine Ganzzahl ist, p eine Anzahl an Motorpolpaaren des Antriebsmotors ist und z eine Anzahl an Nuten eines Stators des Antriebsmotors ist und eine Achse einer beliebigen Nut der Ratsche mit einem Magnetpol des Rotors ausgerichtet ist und die Sperrklinke in Ausrichtung mit dem Stator installiert ist; und
wenn die Sperrklinke in eine beliebige Nut der Ratsche eingeklemmt ist, ein eingeschlossener Winkel eines elektrischen Winkels zwischen einer Achse eines Magnetpols eines Rotors und einer Achse eines Zahns des Stators 0° ist.

## Revendications

1. Appareil de commande (1300) pour moteur d'entraînement d'automobile, dans lequel un stator du moteur d'entraînement comprend un premier enroulement de phase, un deuxième enroulement de phase, et un troisième enroulement de phase, et l'appareil (1300) comprend
une unité de traitement (1301), configurée pour obtenir (901) une position d'un rotor du moteur d'entraînement, dans lequel une extrémité de chaque enroulement de phase est connectée à l'un des bras de pont triphasé, et une autre extrémité de chaque enroulement de phase est connectée, et le moteur d'entraînement est dans un mode de charge boost, et configuré pour charger une batterie d'alimentation de l'automobile après avoir augmenté une tension de charge ;
l'appareil de commande (1300) est **caractérisé en ce que** l'unité de traitement (1301) est configurée pour :
si la position du rotor n'est pas une première position cible, démarrer un frein de stationnement électrique de l'automobile et sortir d'une vitesse de stationnement de l'automobile, avant de fournir un premier courant au moteur d'entraînement, et
si la position du rotor n'est pas ajustée à la première position cible après que le premier courant est fourni au moteur d'entraînement, relâcher le frein de stationnement électrique de l'automobile dans une première durée prédéfinie de sorte qu'un champ magnétique généré par le stator ajuste la position du rotor à la première position cible, pour faire en sorte qu'un couple de rotor bloqué du moteur d'entraînement soit nul.

2. Appareil selon la revendication 1, dans lequel lorsque la position du rotor est la première position cible, un angle compris d'un angle électrique entre un axe direct du moteur d'entraînement et un axe du troisième enroulement de phase est de 0 ° ou 180 °.

3. Appareil (1300) selon la revendication 1, dans lequel l'unité de traitement (1301) est également configurée pour :
si le premier courant est fourni au moteur d'entraînement ou si le frein de stationnement électrique de l'automobile est relâché dans la première durée prédéfinie, mais que la position du rotor n'est pas ajustée à la première position cible, commuter un mode de fonctionnement du moteur d'entraînement vers un mode d'entraînement, de sorte que la batterie d'alimentation alimente le moteur d'entraînement ;
relâcher le frein de stationnement électrique de l'automobile dans un délai prédéfini de deux secondes, de sorte que le champ magnétique généré par le stator ajuste la position du rotor à la première position cible ; et
une fois la position du rotor ajustée à la première position cible, commuter le mode de fonctionnement du moteur d'entraînement au mode de charge boost.

4. Appareil (1300) selon l'une quelconque des revendications 1 à 3, dans lequel l'unité de traitement (1301) est également configuré pour :
fournir un deuxième courant au moteur d'entraînement, de sorte que le moteur d'entraînement charge la batterie d'alimentation après avoir augmenté la tension de charge.

5. Appareil de commande (1400) pour moteur d'entraînement d'automobile, dans lequel le moteur d'entraînement est configuré pour chauffer une batterie d'alimentation de l'automobile, et l'appareil comprend
une unité de traitement (1401) configurée pour
obtenir (1101) une position d'un rotor du moteur d'entraînement ;
l'appareil de commande (1400) est **caractérisé en ce que** l'unité de traitement (1401) est configurée pour :
si la position du rotor du moteur d'entraînement n'est pas une seconde position cible, démarrer un frein de stationnement électrique de l'automobile et sortir d'une vitesse de stationnement de l'automobile, avant de fournir un troisième courant au moteur d'entraînement, et
si la position du rotor n'est pas ajustée à la seconde position cible après que le troisième courant est fourni au moteur d'entraînement,
relâcher le frein de stationnement électrique de l'automobile dans un délai d'une troisième durée prédéfinie de sorte qu'un champ magnétique généré par un stator du moteur d'entraînement ajuste la position du rotor à la seconde position cible, pour faire en sorte qu'un couple de rotor bloqué du moteur d'entraînement soit nul.

6. Appareil selon la revendication 5, dans lequel lorsque la position du rotor est la seconde position cible, un angle compris d'un angle électrique entre un axe d'un pôle magnétique du rotor et un axe d'une dent du stator est de 0 °.

7. Appareil selon la revendication 5 ou 6, dans lequel un angle compris d'un angle électrique entre une direction du champ magnétique généré par le stator et l'axe de la dent du stator est de 0 °.

8. Appareil selon l'une quelconque des revendications 5 à 7, dans lequel l'angle électrique de l'axe de la dent du stator est k • β, β est un angle de rainure de dent donné par β = p 360/z, 0 ≤ k ≤ z/p, k est un entier, p est un nombre de paires de pôles du moteur d'entraînement, et z est un nombre de rainures du stator du moteur d'entraînement.

9. Appareil selon l'une quelconque des revendications 5 à 8, dans lequel l'unité de traitement (1401) est également configurée pour :
fournir un quatrième courant au moteur d'entraînement, de sorte que le moteur d'entraînement chauffe la batterie d'alimentation.

10. Boîte de vitesses de transmission d'automobile, dans laquelle l'automobile comprend un moteur d'entraînement, la boîte de vitesses de transmission comprend un encliquetage et un cliquet, **caractérisée en ce que** le nombre de rainures de l'encliquetage est égal au nombre de paires de pôles du moteur d'entraînement ou le nombre de rainures du cliquet est le double du nombre de paires de pôles du moteur d'entraînement, et un axe d'une quelconque rainure de l'encliquetage est aligné avec un pôle magnétique du rotor et le cliquet est installé en alignement avec le stator ; et
lorsque le cliquet est serré dans une quelconque rainure de l'encliquetage, un angle compris d'un angle électrique entre un axe direct du moteur d'entraînement et une direction d'un champ magnétique généré par un stator est de 0 ° ou 180 °.

11. Boîte de vitesses de transmission d'automobile, dans laquelle l'automobile comprend un moteur d'entraînement, la boîte de vitesses de transmission comprend un encliquetage et un cliquet, **caractérisée en ce que** le nombre de rainures de l'encliquetage est k ·p, 1 ≤k ≤ z/p, k un entier, p est un nombre de paires de pôles du moteur d'entraînement, et z est un nombre de rainures d'un stator du moteur d'entraînement, et un axe d'une quelconque rainure de l'encliquetage est aligné avec un pôle magnétique du rotor et le cliquet est installé en alignement avec le stator ; et
lorsque le cliquet est serré dans une quelconque rainure de l'encliquetage, un angle compris d'un angle électrique entre l'axe d'un pôle magnétique du rotor et un axe d'une dent du stator est de 0°.
